# EUROPEAN PATENT APPLICATION

(11) **EP 4 387 175 A1**
(43) Date of publication of application: **19.06.2024**
(21) Application number: 21954515.9
(22) Date of filing: 25.08.2021
(51) Int. Cl.: H04L 12/40, H04L 9/08

(54) **CHIP, CHIP MANUFACTURING METHOD, AND RELATED APPARATUS**

(71) Applicant: Huawei Technologies Co., Ltd., Shenzhen, Guangdong 518129 (CN)
(72) Inventor: NIU, Renchao, Shenzhen, Guangdong 518129 (CN)
(74) Representative: Isarpatent
(86) International application number: PCT/CN2021/114528
(87) International publication number: WO 2023/023975

(57) **Abstract**

A chip, a chip manufacturing method, and a related apparatus are provided. The method includes: obtaining a target chiplet set based on a design requirement of a chip, where the target chiplet set includes N chiplets, N is a positive integer, the N chiplets are configured to implement different functions, and the functions include at least one of a control function, a computing function, a communication function, and a storage function; and obtaining the chip based on the target chiplet set. Design requirements of different chips can be met by combining chiplets with different functions.

## Description

### TECHNICAL FIELD

This application relates to the field of chip technologies, and in particular, to a chip, a chip manufacturing method, and a related apparatus.

### BACKGROUND

With the evolution of automobile technologies, an electrical/electronic architecture (Electrical/Electronic Architecture, EEA) of a vehicle has changed correspondingly. For example, the EEA evolves from a simple electronic control unit (Electronic Control Unit, ECU) direct connection architecture to a central gateway architecture, then evolves to a domain controller fusion architecture, and continues to evolve to a central processing/computing architecture.

However, different EEAs need to be supported by chips with different computing power, different control functions, and different interfaces. Therefore, if there are more types of EEAs, more types of computing-power chips, control chips, and interface chips need to be designed correspondingly. To meet different requirements, if each type of chip is independently developed, a large quantity of resources are consumed.

### SUMMARY

An objective of this application is to provide a chip, a chip manufacturing method, and a related apparatus, to help meet design requirements of different chips.

According to a first aspect, a chip design method is provided, including: obtaining a design requirement of a chip, where the design requirement includes at least one of the following: a function requirement, a computing power requirement, a bandwidth requirement, an interface protocol type requirement, and a storage requirement; and obtaining a target chiplet set based on the design requirement of the chip, where the target chiplet set includes at least one of the following: a first chiplet, a second chiplet, a third chiplet, a fourth chiplet, and a fifth chiplet, where the first chiplet is configured to connect to at least one sensor and/or control at least one executor, the second chiplet is configured to perform computing, the third chiplet is configured to perform image processing, the fourth chiplet is configured to connect to another device, and the fifth chiplet is configured to: connect to another chiplet, and implement information exchange between chiplets.

The chiplets provided in this embodiment of this application may be classified based on functions, to form, through combination, a chip that meets a design requirement. In this way, an automobile manufacturer may implement chips with different functions in a vehicle by flexibly combining different chiplets, or design chips suitable for various types of vehicles (for example, vehicles of various EEAs) by flexibly combining different chiplets; or an automobile manufacturer may select a chiplet with a corresponding function based on a design requirement of a customer to form a customized vehicle chip of the customer, to meet a customization requirement of the customer. For example, when the customer expects to design a chip, if the chip is required to have a real-time control function, a chiplet, namely, the first chiplet, corresponding to the real-time control function is used. If a strong real-time control function is required, a quantity of first chiplets is increased. Alternatively, if the chip is required to have an algorithm processing function, a chiplet, namely, the second chiplet, corresponding to algorithm processing is used. If a strong algorithm processing capability is required, a quantity of second chiplets may be increased. In this way, chips of different types of vehicles do not need to be separately designed and manufactured, and a same chiplet may be reused between different types of vehicles. This can greatly reduce a large amount of manpower, financial resources, time, and the like consumed for designing and manufacturing chips of different types of vehicles, and improve efficiency.

In a possible design, the chip is a chip in a gateway in the vehicle, and is briefly referred to as a gateway chip.

It should be noted that the chip may be chips in various components such as a gateway, a domain controller, and a self-driving apparatus in the vehicle. In other words, the various components such as the gateway, the domain controller, and the self-driving apparatus in the vehicle may be loaded by using chiplets with corresponding functions. In this way, the automobile manufacturer can implement chips with different functions by flexibly combining different chiplets. This can reduce a large amount of manpower, financial resources, time, and the like consumed for designing and manufacturing the chip, and improve efficiency.

The first chiplet to the fifth chiplet are described below.

For example, the first chiplet includes at least one micro control unit MCU, a protocol converter, and one or more interfaces. The first chiplet is connected to the sensor, the executor, and another chiplet through the interface. The protocol converter is configured to convert sensor data obtained from the sensor from a first protocol to a second protocol, where the first protocol is a communication protocol between the sensor and the first chiplet, and the second protocol is a protocol used for information exchange inside the chip. The micro control unit MCU is configured to: process the sensor data obtained after protocol conversion, to obtain a control signal, and send the control signal to the executor for execution through the interface. In other words, in this embodiment of this application, the first chiplet is responsible for protocol conversion in the vehicle, for example, may send the sensor data to another component such as the domain controller in the vehicle through protocol conversion.

For example, the second chiplet includes at least one processor, at least one MCU, and one or more interfaces. The second chiplet is connected to another chiplet through the one or more interfaces. The processor is configured to perform computing. The MCU is configured to implement real-time control on the second chiplet.

For example, the third chiplet includes at least one GPU, at least one MCU, and one or more interfaces. The third chiplet is connected to another chiplet through the one or more interfaces. The GPU is configured to perform image processing. The MCU is configured to be responsible for real-time control on the third chiplet.

For example, the fourth chiplet includes an interface configured to connect to another chiplet and a transceiver configured to connect to the another device. The transceiver supports a protocol. The protocol includes a protocol used for information exchange inside the chip and/or a communication protocol between the another device and the fourth chiplet.

For example, the fifth chiplet includes at least one MCU, an information forwarder, and one or more interfaces. The fifth chiplet is connected to another chiplet through the one or more interfaces. The MCU is responsible for real-time control on the fifth chiplet. The information forwarding module is configured to implement information forwarding between different chiplets.

For example, the first chiplet, the second chiplet, the third chiplet, the fourth chiplet, and the fifth chiplet each include a safety chip, configured to perform an abnormality alarm. In this way, whether a chiplet is abnormal can be detected by using the safety chip, so that security is high.

In a possible design, after the obtaining a target chiplet set based on the design requirement of the chip, the method further includes: determining a connection relationship between chiplets in the target chiplet set, where the connection relationship includes a circuit connection relationship and a spatial connection relationship, for example, a circuit connection relationship and a spatial connection direction from the first chiplet to the fifth chiplet. The spatial connection relationship may be understood as how a plurality of chiplets are stacked and the like.

The following lists three types of chips (for example, gateway chips) that are loaded by flexibly combining different chiplets.

Type 1: The chip includes the first chiplet, the fourth chiplet, and the fifth chiplet.

In other words, the chip (for example, the gateway chip) includes three types of chiplets with different functions, namely, the first chiplet, the fourth chiplet, and the fifth chiplet. In other words, the chip may be responsible for forwarding data (such as the sensor data). For example, the gateway chip may be a CGW, for example, may be a gateway chip in a vehicle of a central gateway architecture. A reason is that the gateway in the vehicle of the central gateway architecture is mainly responsible for forwarding data. For example, a working procedure of the gateway chip may include the following:

The fourth chiplet receives a control command from the another device, and sends the control command to the first chiplet by using the fifth chiplet, and the first chiplet controls the executor to execute the control command; or
the first chiplet is configured to send, to the fourth chiplet by using the fifth chiplet, the sensor data obtained from the sensor, and the fourth chiplet sends the sensor data to the domain controller in the vehicle, to perform computing by using the domain controller.

Therefore, the gateway chip is a chip with a data forwarding function, has a weak computing capability (without a second chiplet), and is suitable for a vehicle whose EEA is a central gateway architecture.

Type 2: The chip includes the first chiplet, the second chiplet, the fourth chiplet, and the fifth chiplet.

In other words, the chip (for example, the gateway chip) includes four types of chiplets with different functions, namely, the first chiplet, the second chiplet, the fourth chiplet, and the fifth chiplet. Compared with the foregoing first type of chip, the second chiplet is added to the second type of chip, that is, a computing function is added to the chip. For example, the gateway chip may be an FGW, for example, may be a gateway chip in a vehicle of a domain controller fusion architecture. A reason is that the gateway chip in the vehicle of the domain controller fusion architecture is integrated with a part of computing functions of the domain controller. For example, a working procedure of the gateway chip may include the following:

The first chiplet is configured to send, to the second chiplet by using the fifth chiplet, the sensor data obtained from the sensor, and the second chiplet is configured to: perform computing based on the sensor data to generate a corresponding output signal, and send the output signal to the another device by using the fifth chiplet and the fourth chiplet.

Therefore, the gateway chip is a chip with a data forwarding function, further has a specific computing capability, and is suitable for a vehicle whose EEA is a domain controller fusion architecture.

It should be noted that the second type of chip may further include the third chiplet, and the third chiplet is connected to the fifth chiplet. When the third chiplet is added to the chip, an image and/or video input function is added to the chip, so that functions of the chip are richer.

Type 3: The chip includes the first chiplet, the third chiplet, the fifth chiplet, and the fourth chiplet.

In other words, the chip (for example, the gateway chip) includes four types of chiplets with different functions, namely, the first chiplet, the third chiplet, the fourth chiplet, and the fifth chiplet. Compared with the foregoing first type of chip, the third chiplet is added to the third type of chip, that is, an image and/or video input function is added to the chip. For example, the gateway chip may be a ZGW, for example, may be a gateway chip in a vehicle of a central computing architecture. A reason is that computing power of the vehicle of the central computing architecture is centralized in a VCC, and the gateway chip is mainly responsible for sending various data to the VCC for computing. For example, a working procedure of the gateway chip may include the following:

The first chiplet is configured to send, to the fourth chiplet by using the fifth chiplet, the sensor data obtained from the sensor, and the fourth chiplet sends the sensor data to the domain controller; and
the third chiplet is configured to send an image and/or a video to the fourth chiplet by using the fifth chiplet, and the fourth chiplet sends the image and/or the video to the domain controller.

Therefore, the gateway chip has a function of forwarding the sensor data, and further has a function of forwarding the image and/or the video. The gateway chip may forward the sensor data, the image and/or the video, and the like to the domain controller (such as the VCC) for centralized computing. Therefore, the network chip is suitable for the vehicle of the central computing architecture.

In a possible design, the domain controller includes at least one of a VDC, a CDC, an ADC, and an MDC.

It should be noted that the foregoing several domain controllers are merely examples and impose no limitation, and another domain controller may be used.

In a possible design, the sensor apparatus includes at least one of an in-vehicle temperature sensor, an acceleration sensor, a speed sensor, a radar sensor, a fuel level detection sensor, a wheel rotation sensor, a knock sensor, and a crankshaft position sensor. It should be noted that the foregoing several sensors are merely examples and impose no limitation, and another sensor may be used.

In a possible design, the execution apparatus includes at least one of a steering wheel, an accelerator pedal, a brake pedal, a forward gear, a reverse gear, a window, a seat, a door, and an in-vehicle air conditioner. It should be noted that the foregoing several execution apparatuses are merely examples and impose no limitation, and another execution apparatus may be used.

According to a second aspect, a chip in a vehicle is provided, including a first chiplet, a fourth chiplet, and a fifth chiplet, where the first chiplet is configured to connect to an execution apparatus and/or a sensor apparatus that are/is responsible for vehicle control in the vehicle, the fourth chiplet is configured to connect to another device, and the fifth chiplet is configured to connect to the first chiplet and the fourth chiplet, to implement information exchange between the first chiplet and the fourth chiplet.

In some embodiments, the chip may be a gateway chip in the vehicle.

In a possible design, the fourth chiplet receives a control command from the another device, and sends the control command to the first chiplet by using the fifth chiplet, and the first chiplet controls the execution apparatus to execute the control command; or
the first chiplet is configured to send, to the fourth chiplet by using the fifth chiplet, sensor data obtained from the sensor apparatus, and the fourth chiplet sends the sensor data to a domain controller in the vehicle, to perform computing by using the domain controller.

In a possible design, the chip further includes a second chiplet, the second chiplet is configured to perform a computing-related function, and the second chiplet is connected to the fifth chiplet.

In a possible design, the first chiplet is configured to send, to the second chiplet by using the fifth chiplet, the sensor data obtained from the sensor apparatus; the second chiplet is configured to: perform computing based on the sensor data to generate a corresponding output signal, and send the output signal to the fourth chiplet by using the fifth chiplet; and the fourth chiplet sends the output signal to the another device.

In a possible design, the chip further includes a third chiplet, the third chiplet is configured to input an image and/or a video to the chip, and the third chiplet is connected to the fifth chiplet.

In a possible design, the third chiplet is configured to send the image and/or the video to the fourth chiplet by using the fifth chiplet, and the fourth chiplet is configured to send the image and/or the video to the domain controller in the vehicle to perform image-related processing.

In a possible design, the first chiplet includes at least one micro control unit MCU, a protocol converter, and one or more interfaces. The first chiplet is connected to the sensor, the executor, and another chiplet through the interface. The protocol converter is configured to convert the sensor data obtained from the sensor from a first protocol to a second protocol, where the first protocol is a communication protocol between the sensor and the first chiplet, and the second protocol is a protocol used for information exchange inside the chip. The micro control unit MCU is configured to: process the sensor data obtained after protocol conversion, to obtain a control signal, and send the control signal to the executor for execution through the interface.

In a possible design, the second chiplet includes at least one processor, at least one MCU, and one or more interfaces. The second chiplet is connected to another chiplet through the one or more interfaces. The processor is configured to perform computing. The MCU is configured to implement a part of control functions of the vehicle.

In a possible design, the third chiplet includes at least one GPU, at least one MCU, and one or more interfaces. The third chiplet is connected to another chiplet through the one or more interfaces. The GPU is configured to perform image processing. The MCU is configured to be responsible for real-time control on the third chiplet.

In a possible design, the fourth chiplet includes an interface configured to connect to another chiplet and a transceiver configured to connect to the another device. The transceiver supports a protocol. The protocol includes a protocol used for information exchange inside the chip and/or a communication protocol between the another device and the fourth chiplet.

In a possible design, the fifth chiplet includes at least one MCU, an information forwarder, and one or more interfaces. The fifth chiplet is connected to another chiplet through the one or more interfaces. The MCU is responsible for real-time control on the fifth chiplet. The information forwarding module is configured to implement information forwarding between different chiplets.

In a possible design, the first chiplet, the second chiplet, the third chiplet, the fourth chiplet, and the fifth chiplet each include a safety chip, configured to perform an abnormality alarm.

In a possible design, the domain controller includes at least one of a VDC, a CDC, an ADC, and an MDC.

In a possible design, the sensor apparatus includes at least one of an in-vehicle temperature sensor, an acceleration sensor, a speed sensor, a radar sensor, a fuel level detection sensor, a wheel rotation sensor, a knock sensor, and a crankshaft position sensor.

In a possible design, the execution apparatus includes at least one of a steering wheel, an accelerator pedal, a brake pedal, a forward gear, a reverse gear, a window, a seat, a door, and an in-vehicle air conditioner.

According to a third aspect, a chip is further provided, including a first chiplet, a fourth chiplet, and a fifth chiplet, where
the first chiplet is configured to connect to at least one sensor and/or control at least one executor;
the fourth chiplet is configured to connect to another device;
the fifth chiplet is configured to: connect to another chiplet, and implement information exchange between chiplets; and
the first chiplet, the fourth chiplet, and the fifth chiplet are chiplets that are obtained based on a design requirement of the chip and that are configured to implement different functions.

According to a fourth aspect, a chip manufacturing method is further provided, including:
obtaining a target chiplet set based on a design requirement of a chip, where the target chiplet set includes N chiplets, N is a positive integer, the N chiplets are configured to perform different functions, and the functions include at least one of a control function, a computing function, a communication function, and a storage function; and
obtaining the chip based on the target chiplet set.

In a possible design, the target chiplet set includes at least one of the following:
a first chiplet, a second chiplet, a third chiplet, a fourth chiplet, and a fifth chiplet, where the first chiplet is configured to connect to at least one sensor and/or control at least one executor, the second chiplet is configured to perform computing, the third chiplet is configured to perform image processing, the fourth chiplet is configured to connect to another device, and the fifth chiplet is configured to: connect to another chiplet, and implement information exchange between chiplets.

In a possible design, the design requirement includes at least one of the following: a function requirement, a computing power requirement, a bandwidth requirement, an interface protocol type requirement, and a storage requirement.

For example, for descriptions of the chiplets in the third aspect and the fourth aspect, refer to the descriptions in the first aspect or the second aspect. Details are not described again.

According to a fifth aspect, a vehicle is further provided, including the chip provided in the second aspect or the third aspect.

According to a sixth aspect, a gateway device is further provided, including the chip provided in the second aspect or the third aspect.

According to a seventh aspect, a chip manufacturing apparatus is further provided, including a memory and one or more processors, where the memory is configured to store computer program code, the computer program code includes computer instructions, and when the computer instructions are executed by the processor, the apparatus is enabled to perform the method according to the first aspect or the fourth aspect.

According to an eighth aspect, a computer-readable storage medium is further provided, including computer instructions, where when the computer instructions run on a chip design apparatus, the chip design apparatus is enabled to perform the method according to the first aspect or the fourth aspect.

According to a ninth aspect, a computer program product is further provided. When the computer program product runs on a processor, the processor is enabled to perform the method according to the first aspect or the fourth aspect.

For beneficial effects of the second aspect to the ninth aspect, refer to the beneficial effects of the first aspect. Details are not described again.

### BRIEF DESCRIPTION OF DRAWINGS

FIG. 1 is a schematic diagram of a vehicle according to an embodiment of this application;
FIG. 2 is another schematic diagram of a vehicle according to an embodiment of this application;
FIG. 3 is a schematic diagram of a chip in a vehicle according to an embodiment of this application;
FIG. 4 is a schematic diagram of vehicle systems of different EEAs according to an embodiment of this application;
FIG. 5 is another schematic diagram of vehicle systems of different EEAs according to an embodiment of this application;
FIG. 6 is a schematic diagram of a gateway in a vehicle of a central gateway architecture according to an embodiment of this application;
FIG. 7A and FIG. 7B are schematic diagrams of a gateway in a vehicle of a domain controller fusion architecture according to an embodiment of this application;
FIG. 8A and FIG. 8B are schematic diagrams of a gateway in a vehicle of a central processing/computing architecture according to an embodiment of this application;
FIG. 9 is a schematic flowchart of a chip design method according to an embodiment of this application; and
FIG. 10 and FIG. 11 are schematic diagrams of a chip design apparatus according to an embodiment of this application.

### DESCRIPTION OF EMBODIMENTS

A chip provided in embodiments of this application may be suitable for a transportation tool. The transportation tool includes at least one of an ordinary vehicle (fuel-powered vehicle) and an electric vehicle. A form of the vehicle may include at least one of a car, a truck, a motorcycle, a bus, a boat, an airplane, a helicopter, a lawn mower, a snowplow, a recreational vehicle, an amusement park vehicle, agricultural equipment, construction equipment, a tramcar, a golf cart, a train, and the like. The chip provided in the embodiments of this application may be suitable for various types of vehicles such as a low-end vehicle, a mid-range vehicle, and a high-end vehicle. For example, the chip provided in the embodiments of this application may be used for an ordinary fuel-powered vehicle or a high-end self-driving car. The self-driving car may include a fully automated driving mode or a partially automated driving mode. Fully automated driving may be understood as that a vehicle does not require a manual operation, and partially automated driving may be understood as combining a manual operation and a vehicle automated operation. For example, when the vehicle is in the fully automated driving mode, the vehicle may determine current states (for example, a possible behavior of at least one another vehicle in a surrounding environment) of the vehicle and the surrounding environment of the vehicle, and control automated driving of the vehicle based on the current state of the surrounding environment, for example, planning a route, and controlling a driving speed and a driving direction.

Automobile technologies are developing to become more electrified, connected, intelligent, and shared. Development of the four new trends requires more chips to support a complex control and computing requirement. For example, various types of algorithms of a most popular self-driving technology currently under study need to be supported by a chip with high computing power. Generally, the vehicle includes at least one chip. It may be understood that a larger quantity of functions of the vehicle indicates a larger quantity of chips that need to be integrated. Generally, to protect the chip, a packaging (or referred to as encapsulation) technology may be applied. In addition, a larger quantity of chips indicates a higher requirement on the packaging technology, especially for a self-driving car. Because the self-driving car requires high computing power, a large quantity of computing chips need to be integrated or a chip area needs to be increased to improve the computing power. This undoubtedly causes huge packaging costs and power consumption, and conflicts with a device miniaturization requirement.

Certainly, one solution is to use an advanced packaging technology, for example, a 3D packing technology such as a 3D through-silicon via (3D-Through Silicon Via, 3D-TSV) technology or a 3D-TSV dynamic random access memory (Dynamic RAM, DRAM) packaging technology. The 3D-TSV DRAM packaging technology is used as an example. A die (die) may be used to stack DRAMs that are interconnected by using a TSV layer. This packaging technology is advanced, and is generally applied to a device (for example, a cloud server that needs to process large-scale data) that has a high-complex algorithm and high computing power requirement. Although the 3D packaging technology can meet a development requirement of a self-driving chip with high computing power, the packaging technology has high costs, and is not suitable for a vehicle (for example, the low-end vehicle) with low costs. Another solution is to use a chip with a high computing capability. For example, a chip with a storage and computing function (a technology in which an internal memory has a computing function) is used. If the chip with high computing power is used, computing power can be improved, and a quantity of chips is reduced to a specific extent. However, the chip with high computing power cannot meet requirements of different EEAs. For vehicles of different EEAs, chips with different computing power, different control functions, and different interfaces still need to be designed and manufactured for support. In addition, costs of the chip with high computing power are high.

The embodiments of this application provide a method for designing a chip in a vehicle, to resolve a problem that a large quantity of resources need to be consumed when chips with different computing power, different control functions, and different interface functions need to be designed and manufactured for vehicles of different EEAs. For example, function division is performed on vehicles of various EEAs, different functions are implemented by designing corresponding chiplets, and chiplets with different functions are combined to form a chip.

For ease of understanding, the following first briefly describes the chiplet (Chiplet).

The chiplet is a type of die that meets a specific function, and may be referred to as a module chip. In short, the chiplet is a die (die) with a specific functional characteristic. The functional characteristic is, for example, a data storage function, a communication function (such as a USB), a computing function, and a control function. One chiplet can be independently packaged into a chip with a specific function, and a plurality of chiplets can form a complex chip. A plurality of chiplets may cooperate to implement a part of control and/or computing functions of a vehicle, or even all control and/or computing functions of a vehicle. The chiplets are combined and reused. This can improve a yield rate and reduce costs, and can reduce a quantity of dedicated chips, reduce packaging difficulty, and meet a device miniaturization requirement.

That function division is performed on vehicles of various EEAs, and different functions are implemented by designing corresponding chiplets may include: dividing functions (each function is described below) such as protocol conversion, real-time control, algorithm processing, data exchange and forwarding, image/or video input, and an Ethernet physical layer transceiver in the vehicle, and designing corresponding chiplets to implement corresponding functions. In this way, an automobile manufacturer may select a chiplet with a corresponding function based on a function requirement of a customer to form a vehicle of an EEA customized by the customer, to meet a customization requirement of the customer. For example, if a vehicle requires the real-time control function, a chiplet corresponding to the real-time control function is used; or if a vehicle requires the algorithm processing function, a chiplet corresponding to the algorithm processing function is used. In this way, chips of vehicles of different EEAs do not need to be separately designed and manufactured, and a same chiplet may be reused between vehicles of different EEAs. This can greatly reduce a large amount of manpower, financial resources, time, and the like consumed for designing and manufacturing the chip, and improve efficiency.

An embodiment of this application provides a chip architecture in a vehicle. The chip architecture may be chip architectures in various components such as a gateway, a domain controller, and a self-driving apparatus in the vehicle. A chip based on the chip architecture may include at least one of a first chiplet, a second chiplet, a third chiplet, a fourth chiplet, and a fifth chiplet. In a possible implementation, the chip based on the architecture may further include another chiplet. The chiplet provided in this embodiment of this application should not be understood as a limitation on a chiplet type that can be provided by the architecture provided in this application.

Different chiplets in the first chiplet, the second chiplet, the third chiplet, the fourth chiplet, and the fifth chiplet implement different functions. For example, the first chiplet is configured to connect to an execution apparatus and/or a sensor apparatus that are/is responsible for vehicle control in the vehicle. For example, the first chiplet has a protocol conversion function and a real-time control function. The second chiplet is configured to perform computing, for example, computing processing related to the vehicle. The third chiplet is configured to perform image processing, for example, may input an image and/or a video to the chip. The fourth chiplet is configured to connect to another device. For example, the fourth chiplet has a transceiver function (for example, an Ethernet physical layer transceiver function), and may communicate with the another device. The fifth chiplet has a data exchange and forwarding function. For example, the fifth chiplet may be separately connected to the first chiplet, the second chiplet, the third chiplet, and the fourth chiplet, to implement data exchange and forwarding between different chiplets.

Each of the first chiplet, the second chiplet, the third chiplet, the fourth chiplet, and the fifth chiplet may include one or more chiplets. This is not limited in this embodiment of this application.

In a possible implementation, the first chiplet, the second chiplet, the third chiplet, the fourth chiplet, and the fifth chiplet may be independent of each other. Each type of chiplet may be independently developed, independently designed, independently manufactured, independently packaged, independently sold, independently maintained, independently upgraded, independently tested, independently run/used, and the like. In addition, the first chiplet, the second chiplet, the third chiplet, the fourth chiplet, and the fifth chiplet may be reused in different chips. In this way, a chip that meets a target function may be quickly formed by selecting a chiplet with a corresponding function.

For example, when an automobile manufacturer A expects to produce a vehicle based on a central gateway architecture, a chip including the first chiplet, the fourth chiplet, and the fifth chiplet may be used. For another example, when an automobile manufacturer B expects to produce a vehicle based on a domain controller fusion architecture, a chip including the first chiplet, the second chiplet, the fifth chiplet, and the fourth chiplet may be used. For another example, when an automobile manufacturer C expects to produce a vehicle based on a central computing architecture, a chip including the first chiplet, the third chiplet, the fifth chiplet, and the fourth chiplet may be used.

In short, the chiplets provided in this embodiment of this application may be classified based on functions, to form, through combination, the chip that can meet the target function, to meet requirements of vehicles having different electrical/electronic architectures. In addition, the chiplets are reused. This can greatly reduce a large amount of manpower, financial resources, and time consumed for designing and manufacturing the chip, and improve efficiency.

It should be noted that the vehicle includes various components. Various components may be constructed by using the chiplet provided in this embodiment of this application. For example, the vehicle includes chip packages (or referred to as chip architectures) of various components such as a gateway, a self-driving apparatus, and a domain controller (Domain Control Unit, DCU). The gateway may be constructed by using at least one of the first chiplet to the fifth chiplet. Certainly, the self-driving apparatus or the domain controller may be constructed by using the chiplet provided in this embodiment of this application. To be specific, the entire vehicle system includes several chip packages (or referred to as chip architectures), and any one or more chip packages in the several chip packages may be constructed by using the chiplet provided in this embodiment of this application.

It should be noted that chip layout manners of vehicles of different EEAs are different. For example, layout manners of gateways or domain controllers in the vehicles of different EEAs are different; or quantities of gateways and/or quantities of domain controllers in the vehicles of different EEAs are different. The automobile manufacturer may select a chiplet with a corresponding function based on a layout manner customized by the customer, to load and form a chip that is of a vehicle of an EEA and that has a customized layout manner.

It should be noted that, as described above, a plurality of chiplets may be used to load and form a complex chip. Compared with a manner in which an entire chip is tested, maintained, upgraded, or the like, a granularity of the chiplet is finer, and costs of testing, maintaining, and upgrading the chiplet are low. Therefore, a yield rate of the chiplet is easily improved, and a yield rate of a chip loaded by using a plurality of chiplets is high. In addition, in this application, when a plurality of chiplets are used to load a chip, a specific packaging technology may be used. For example, the packaging technology may be 2D packaging or 3D packaging. Currently, when a plurality of chips are used to load a chiplet, each chip needs to be separately packaged, and the plurality of chips obtained after packaging are repackaged to form a chip system. In this application, when a plurality of chiplets are used to load a chip, each chiplet may not need to be separately packaged, and only one time of packaging is required when the plurality of chiplets are used to load a chip, thereby helping reduce packaging costs.

The following describes in detail the technical solutions provided in this embodiment of this application with reference to the accompanying drawings.

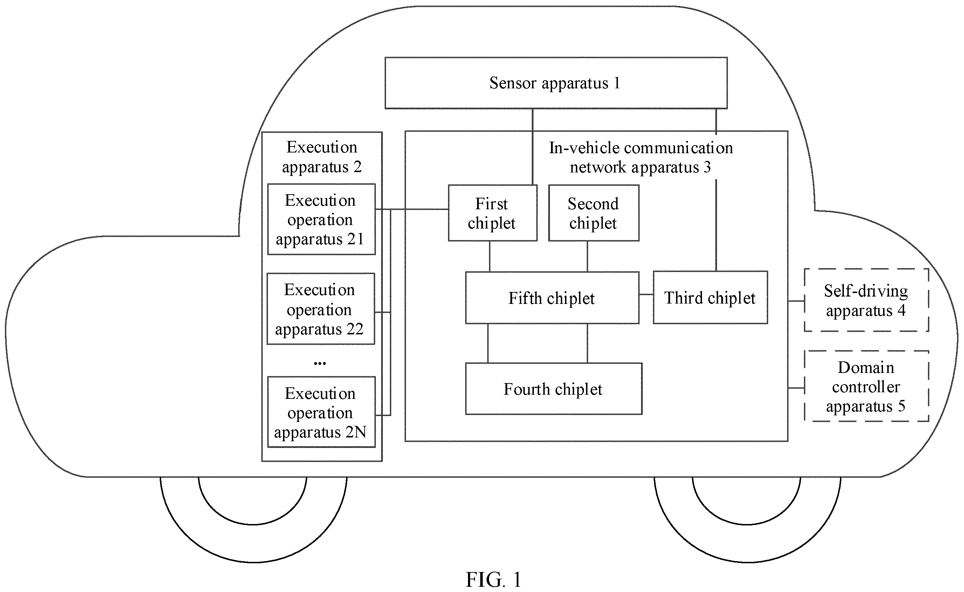

For example, FIG. 1 is a schematic diagram of a vehicle. The vehicle includes a sensor apparatus 1, an execution apparatus 2, and an in-vehicle communication network apparatus 3. Optionally, the vehicle may further include a self-driving apparatus 4, and the self-driving apparatus 4 may be connected to the in-vehicle communication network apparatus 3. The self-driving apparatus 4 may be referred to as a self-driving brain, and may receive sensing data provided by the sensor apparatus 1, generate a self-driving instruction based on the sensing data, and send the self-driving instruction to the execution apparatus 2 to complete self-driving. Optionally, the vehicle may further include a domain controller apparatus 5. The domain controller apparatus 5 may be connected to the in-vehicle communication network apparatus 3. The domain controller apparatus 5 includes at least one of a vehicle domain controller (Vehicle Domain Controller, VDC), an intelligent cockpit domain controller (Cockpit Domain Controller, CDC), an intelligent driving domain controller (ADAS/AD Domain Controller, ADC), and a mobile data center (Mobile Data Center, MDC). This is not limited in this embodiment of this application.

The sensor apparatus 1 may include various types of sensors. For example, the sensor includes at least one of an in-vehicle temperature sensor, an acceleration sensor, a speed sensor, a radar sensor, a fuel level detection sensor, a wheel rotation sensor, a knock sensor, and a crankshaft position sensor. The sensor apparatus may further include an image collection apparatus and the like. For brevity, the sensors in the vehicle are not listed one by one herein.

The execution apparatus 2 may include an execution operation apparatus 21 to an execution operation apparatus 2N. For example, the execution apparatus 2 includes a steering wheel, an accelerator pedal, a brake pedal, and the like. For example, the execution operation apparatus 21 is a steering wheel, an execution operation apparatus 22 is an accelerator pedal, and an execution operation apparatus 23 (not shown in FIG. 1) is a brake pedal. It may be understood that the vehicle may further include another execution operation apparatus, for example, a gear (for example, a forward gear or a reverse gear), a window, a seat, a door, and an in-vehicle air conditioner that are not listed one by one in this embodiment of this application.

The in-vehicle communication network apparatus 3 includes processing of various communication interfaces and protocols and various functions such as application of algorithm computing and vehicle control. The communication interface and protocol include at least one of a universal asynchronous receiver/transmitter (Universal Asynchronous Receiver/Transmitter, UART), a serial peripheral interface (Serial Peripheral Interface, SPI), a controller area network (Controller Area Network, CAN), a local interconnect network (Local Interconnect Network, LIN), an Ethernet, and the like. The computing function in the in-vehicle communication network apparatus 3 may be understood as a self-driving cerebellum of the vehicle. For example, various sensing data collected by the sensor apparatus 1 is input to the in-vehicle communication network apparatus 3 by using different protocols (such as the CAN or the Ethernet), to send the collected sensing data to the self-driving apparatus 4 or the domain controller apparatus 5 through routing by the in-vehicle communication network apparatus 3. A control instruction generated by the self-driving apparatus 4 may also be sent, by using the in-vehicle network apparatus 3 based on a specified route, to the execution apparatus 2 for execution. Optionally, the in-vehicle communication network apparatus 3 may be a gateway (a chip in the gateway may be referred to as a gateway chip in this specification) in the vehicle.

The in-vehicle communication network apparatus 3 includes a chip, and the chip includes at least one of a first chiplet, a second chiplet, a third chiplet, a fourth chiplet, and a fifth chiplet. The first chiplet is configured to connect to the execution apparatus 2 and/or the sensor apparatus 1 that are/is responsible for vehicle control in the vehicle. The second chiplet is configured to perform computing, for example, implement computing processing related to the vehicle. The third chiplet is configured to perform image processing, for example, input an image and/or a video. The fourth chiplet is configured to communicate with another device, for example, has a transceiver function (for example, an Ethernet physical layer transceiver function). The fifth chiplet is used as a data exchange chiplet, and is responsible for data exchange between chiplets.

Still as shown in FIG. 1, a quantity of chiplets included in the in-vehicle communication network apparatus 3 is not limited in this application. For example, an automobile manufacturer may adjust a quantity of chiplets in each chip based on a function or performance requirement. For example, based on a data exchange requirement, the fifth chiplet may include one or more data exchange chiplets. For another example, the second chiplet may include one or more computing chiplets based on a computing amount. It may be understood that, when the quantity of chiplets is excessively large, some impact is caused, for example, packaging difficulty is increased, power consumption is increased, and much heat is generated. Therefore, the quantity of chiplets may be restricted based on a packaging size, power consumption, a heat dissipation capability, and the like of a chip architecture, to avoid problems such as huge packaging costs, high power consumption, and a failure to dissipate heat in a timely manner due to an excessively large quantity of chiplets.

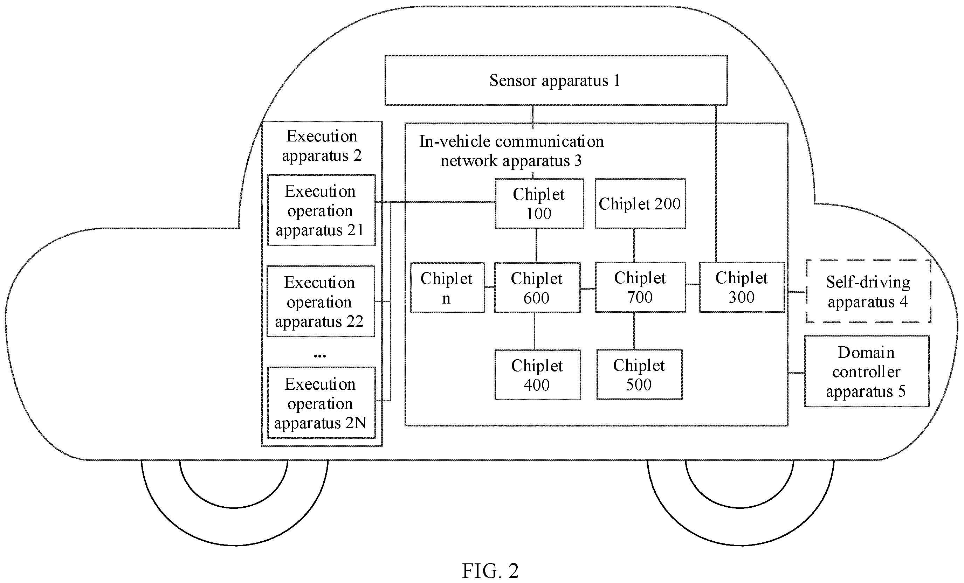

FIG. 2 is a schematic diagram of a vehicle according to an embodiment of this application. FIG. 2 may be understood as a refinement of FIG. 1. Specifically, as shown in FIG. 2, the in-vehicle communication network apparatus 3 includes a chiplet 100, a chiplet 200, a chiplet 300, a chiplet 400, a chiplet 500, a chiplet 600, and a chiplet 700. To be specific, with reference to FIG. 1 and FIG. 2, the first chiplet includes the chiplet 100, the second chiplet includes the chiplet 200, the third chiplet includes the chiplet 300, the fourth chiplet includes the chiplet 400 and the chiplet 500, that is, the fourth chiplet includes two chiplets configured to connect to another device, and the fifth chiplet includes the chiplet 600 and the chiplet 700, that is, the fifth chiplet includes two data exchange chiplets. In other words, in FIG. 2, an example in which the in-vehicle communication network apparatus 3 includes two chiplets (the chiplet 400 and the chiplet 500) configured to connect to another device and two data exchange chiplets (the chiplet 600 and the chiplet 700) is used.

The chiplet 100 is connected to the sensor apparatus 1 and the execution apparatus 2, and is further connected to the chiplet 600. The chiplet 200 is connected to the chiplet 700. The chiplet 300 is separately connected to the sensor apparatus 1 and the chiplet 700. The chiplet 400 is connected to the chiplet 600. The chiplet 500 is connected to the chiplet 700. Optionally, the in-vehicle communication network apparatus 3 may further include a chiplet n, configured to implement a user-defined function.

The chiplet 100 supports a first protocol and a second protocol. The first protocol is a communication protocol used for data transmission between the sensor apparatus 1 and the in-vehicle communication network apparatus 3, and the second protocol is a communication protocol used for information exchange inside the in-vehicle communication network apparatus 3. The first protocol between the sensor apparatus 1 and the in-vehicle communication network apparatus 3 includes but is not limited to at least one of a controller area network (Controller Area Network, CAN) and a local interconnect network (Local Interconnect Network, LIN). The second protocol used for information exchange inside the in-vehicle communication network apparatus 3 includes an Ethernet protocol. The chiplet 100 may implement conversion between different protocols, for example, conversion from the CAN and the LIN to the Ethernet protocol or conversion from the Ethernet protocol to the CAN and the LIN. For example, the chiplet 100 is connected to the sensor apparatus 1. An example in which the sensor apparatus 1 includes a radar is used. When the radar collects radar data, the radar data is encapsulated by using the CAN protocol, and the encapsulated data is transmitted to the chiplet 100. The chiplet 100 converts, into an Ethernet protocol packet, the radar data encapsulated by using the CAN protocol, and the radar data packet that is obtained after conversion and that complies with the Ethernet protocol may be transmitted to another chiplet in the in-vehicle communication network apparatus 3. Therefore, the chiplet 100 may be used as an entrance for sensing data of the sensor apparatus 1 to enter the in-vehicle communication network apparatus 3 (chiplet system).

The chiplet 100 may further include a real-time vehicle control function. The real-time vehicle control function is control of the execution apparatus 2 on the vehicle. As described above, the execution apparatus 2 includes at least one of a steering wheel, an accelerator pedal, a brake pedal, and the like. An example in which the execution apparatus 2 is a steering wheel is used. The chiplet 100 may control a rotation angle of the steering wheel, a rotation speed of the steering wheel, and the like, to control steering of the vehicle and control a steering speed of the vehicle. An example in which the execution apparatus 2 is an accelerator pedal is used. The chiplet 100 may control a close/opening degree, a close/opening speed, and the like of the accelerator pedal, to control driving of the vehicle to accelerate and control acceleration of the vehicle when the vehicle accelerates. An example in which the execution apparatus 2 is a brake pedal is used. The chiplet 100 may control a close/opening degree, a close/opening speed, and the like of the brake pedal, to control the vehicle to accelerate/decelerate and control acceleration of the vehicle when the vehicle accelerates/decelerates.

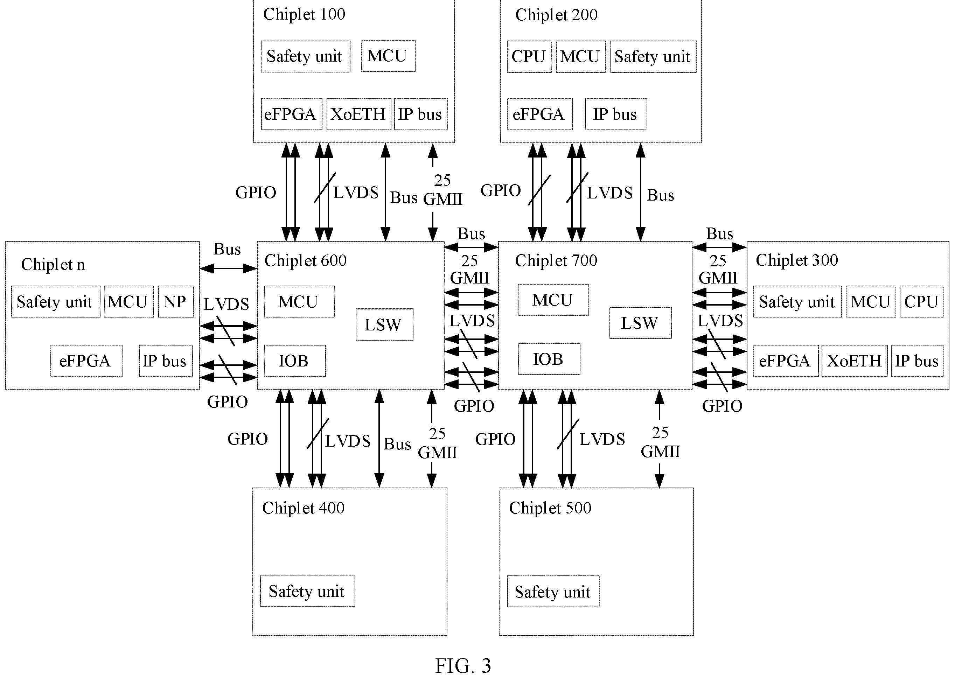

For example, for a specific structure of the chiplet 100, refer to FIG. 3. As shown in FIG. 3, the chiplet 100 includes a field programmable gate array (Field Programmable Gate Array, FPGA) or an embedded FPGA (Embedded FPGA, eFPGA), at least one micro control unit (Micro Control Unit, MCU), a protocol converter, an IP bus (Bus_IP), a safety (safety) unit, and the like. The eFPGA is responsible for supporting modification of a control word format after the chiplet 100 is designed, and reserving flexibility for function expansion of the chiplet 100 in actual application. The MCU is responsible for real-time signal processing and control, for example, information such as an angle and a position from a sensor used for power steering. After the MCU processes the information, a control signal of a power steering motor is generated. The control information is used to help a driver flexibly control the steering wheel. The protocol converter is responsible for conversion between the first protocol and the second protocol (for the first protocol and the second protocol, refer to the foregoing descriptions). For example, an Ethernet (Ethernet, ETH) protocol converter such as an XoETH may be responsible for converting signals of protocols such as the CAN, the LIN, and a mobile industry processor interface (Mobile Industry Processor Interface, MIPI) into an Ethernet signal, or converting an Ethernet signal into protocols such as the CAN, the LIN, and the MIPI. The Bus_IP is responsible for an Ethernet protocol interface for interconnection between chiplets, and implements data sending/receiving between the chiplet 100 and another chiplet. The safety (safety) unit is responsible for a safety processing function such as alarming or starting backup when a function of the chiplet 100 is abnormal. A communication interface between the chiplet 100 and another chiplet may include at least one of a GPIO, an LVDS, a BUS, and a 25 GMII. This is not limited in this embodiment of this application.

The chiplet 200 is responsible for computing. For example, the chiplet 200 supports different applications in performing corresponding computing. The application may be an application program related to self-driving, for example, a map application. Certainly, the application may alternatively be an entertainment application (a music application, a broadcast application, or the like). The computing related to the vehicle includes: computing of a driving path, computing of a driving speed/direction, identification of a surrounding environment, and the like. The map application is used as an example. The chiplet 200 may locate a current position of the vehicle based on sensing data (sent by the chiplet 100 to the chiplet 200) collected by the sensor apparatus 1, then mark the current position of the vehicle on a map, plan a driving route on the map based on the current position and a destination, and perform a corresponding self-driving operation based on the driving route. The application may be a third-party application or a function application customized by an automobile manufacturer. This is not limited in this embodiment of this application. There may be one or more chiplets 200. It should be understood that, if more computing functions need to be implemented, a plurality of chiplets 200 may be deployed.

For example, for a specific structure of the chiplet 200, refer to FIG. 3. As shown in FIG. 3, the chiplet 200 includes at least one central processing unit (central processing unit, CPU), at least one MCU, at least one safety (safety) chip, an FPGA or an eFPGA, and a Bus_IP. The CPU is responsible for computing processing of an application such as a vehicle software upgrade (Over-the-Air Technology, OTA) management function and an in-vehicle network information security management firewall function. The MCU is responsible for a real-time control function and the like. Optionally, the chiplet 200 may also perform a part of vehicle control functions. In other words, a part of control functions of the vehicle are performed by the MCU of the chiplet 100, and another part of real-time control functions are performed by the MCU of the chiplet 200. For example, air-conditioner control, window control, and door control of a cockpit may be processed by using the MCU of the chiplet 200. The information such as the angle and the position collected by the sensor used for power steering is processed by the MCU of the chiplet 100 to generate the control signal of the power steering motor, to help the driver flexibly control the steering wheel. The safety unit is responsible for abnormality processing or alarming of each functional safety in the chiplet 200. The eFPGA is responsible for modification of a control word format in the chiplet 200 and a special requirement in later-stage application such as conversion of a control signal level between high and low levels. The Bus_IP is responsible for an Ethernet protocol interface for interconnection between chiplets. Still as shown in FIG. 2, a communication interface between the chiplet 200 and another chiplet includes at least one of a general purpose input/output (General-Purpose IO ports, GPIO) interface, a low voltage differential signal (Low Voltage Differential Signaling, LVDS) interface, and a bus (BUS). This is not limited in this embodiment of this application.

The chiplet 300 supports image and/or video input, and may be understood as an entrance for an image and/or a video to enter the in-vehicle communication network apparatus 3. The chiplet 300 is connected to the sensor apparatus 1, and the sensor apparatus 1 may include an image collection apparatus (a camera). Therefore, the image collection apparatus may transmit the collected image and/or video to the chiplet 300, and enter the chiplet system by using the chiplet 300.

For example, for a specific structure of the chiplet 300, refer to FIG. 3. As shown in FIG. 3, the chiplet 300 includes at least one graphics processing unit (Graphics Processing Unit, GPU), at least one MCU, at least one safety unit, an FPGA or an eFPGA, an XoETH, and a Bus_IP. The GPU is responsible for processing image data, for example, a function of displaying an image obtained by splicing images of a plurality of cameras. The MCU is responsible for real-time control signal processing of the current chiplet, for example, a function of configuring an internal register of the current chiplet. The safety unit is responsible for abnormality processing or alarming of safety of each function in the chiplet 300. The eFPGA is responsible for defining a format of a control signal in a later stage, reserving function expansion, and the like. The XoETH is responsible for conversion between a camera MIPI protocol and an Ethernet protocol, and may convert a camera signal into an Ethernet signal, and send the Ethernet signal to the self-driving apparatus 4 or the domain controller apparatus 5 to perform image-related computing. The Bus_IP is responsible for an Ethernet protocol interface for interconnection between chiplets. As shown in FIG. 2, a communication interface between the chiplet 300 and another chiplet includes at least one of a GPIO, an LVDS, a BUS, and a gigabit media independent interface (Gigabit Media Independent Interface, GMII). The GMII may be a 25 GMII. This is not limited in this embodiment of this application.

The chiplet 400 includes at least one safety unit, and further includes at least one transceiver, for example, an Ethernet transceiver (not shown in the figure), configured to implement remote communication of an Ethernet signal. The Ethernet transceiver may implement a transceiving function between the vehicle and another device. The another device includes at least one of an Ethernet camera in the vehicle, an in-vehicle infotainment device, a telematics box (Telematics BOX, T-BOX for short) (the T-BOX may be used as an in-vehicle wireless gateway), a self-driving device, and various domain controllers. For example, the Ethernet transceiver may include an Ethernet physical interface, supports a physical layer transceiving function with a specific bandwidth, where the bandwidth is, for example, 100 M, 1000 M, or 10 G, and is configured to connect to another device. The chiplet 400 may support the second protocol, where the second protocol is a protocol supported by information exchange in the in-vehicle communication network apparatus 3. For example, the second protocol may be an Ethernet protocol. For example, the Ethernet may be a backbone Ethernet. As described above, the chiplet 100 may convert, into the Ethernet protocol, the sensing data collected by the sensor apparatus 1, and the sensing data converted into the Ethernet protocol further needs to be sent to another domain controller by using backbone Ethernets of the chiplet 600 and the chiplet 400. For example, the chiplet 400 establishes a connection to another chiplet such as the chiplet 600 by using at least one of the GPIO, the LVDS, the BUS, and the 25 GMII. This is not limited in this embodiment of this application. Optionally, the chiplet 400 may further support a third protocol, for example, a communication protocol between another device and the chiplet 400.

Optionally, functions of the chiplet 500 and the chiplet 400 may be the same. When more Ethernet ports are required, the chiplet 400 and the chiplet 500 are used. When fewer Ethernet ports are required, only the chiplet 400 may be used, and the chiplet 500 does not need to be used.

The chiplet 600 supports information forwarding between different chiplets, and may be understood as a communication bridge between different chiplets (for example, the chiplet 100 and the chiplet 400). The chiplet 600 includes at least one MCU, a local area network switch (LAN SWitch, LSW), and a programmable input/output module (In Out Block, IOB). The MCU is responsible for real-time control on the current chiplet, for example, configuration of a register with high real-time performance in the chiplet. The LSW is responsible for high-speed Ethernet packet exchange and forwarding, supports an Ethernet protocol and a time-sensitive networking (Time-Sensitive Networking, TSN) protocol, and can implement information forwarding between different chiplets. The IOB is responsible for an interface for direct connection between high-speed electrical signals. The chiplet 600 may be connected to another chiplet by using at least one of a GPIO, an LVDS, and a BUS. In addition to the LSW, a device responsible for high-speed Ethernet packet exchange and forwarding may also be another data forwarder (or information forwarder). No limitation is imposed.

Functions of the chiplets 700 and the chiplets 600 may be the same, and both support information exchange between different chiplets. For example, when there are a large quantity of ports through which exchange needs to be performed internally, or a bandwidth of an exchanged signal is large, two or more exchange chiplets may be used. When there are a small quantity of ports through which exchange needs to be performed internally, or a bandwidth of an exchanged signal is small, one exchange chiplet may be used. It should be noted that in FIG. 1, an example in which two exchange chiplets (namely, the chiplet 600 and the chiplet 700) are included is used for description. However, a quantity of exchange chiplets is not limited in this embodiment of this application, and more or fewer exchange chiplets may be included.

Optionally, the vehicle system may further include the chiplet n, and the chiplet n may be configured to implement a personalized function. The chiplet n includes at least one safety unit, at least one MCU, at least one Bus_IP, an eFPGA, and a network processor (Network Processor, NP). The MCU is responsible for real-time control on the current chiplet, for example, configuration of a register with high real-time performance in the chiplet. The safety unit is responsible for abnormality processing or alarming of safety of each function in the chiplet n. The Bus_IP is responsible for an interface for interconnection between chiplets. The NP is responsible for processing an Ethernet packet, has a programmability capability, and supports definition and expansion of a new packet. The eFPGA is responsible for a programmability capability of a circuit, and supports expansion functions such as redefinition of a control signal. The automobile manufacturer may implement, by using the chiplet n, a function defined by the manufacturer.

In some embodiments, the in-vehicle communication network apparatus 3 may be a gateway (Gate Way, GW) in the vehicle. The gateway GW is connected to at least one electronic control unit ECU in the vehicle, and is configured to implement data exchange between ECUs. The GW may be at least one of a central gateway (Central Gate Way, CGW) and a fusion gateway (Fusion gate way, FGW). This is not limited in this embodiment of this application.

In the foregoing embodiment, an example in which the vehicle includes the chiplet 100 to the chiplet 700 is used for description. As described above, different chiplet combinations may be used for vehicles of different electrical/electronic architectures. The following embodiments describe composition of chips of three vehicles of different electrical/electronic architectures. For example, an example in which the EEA includes a central gateway architecture, a domain controller fusion architecture, and a central processing/computing architecture is used for description.

### 1. Central gateway architecture

The central gateway architecture can be understood as that computing power is centralized in a domain controller (Domain Control Unit, DCU) in the vehicle system. The domain controller includes at least one of a vehicle domain controller (Vehicle Domain Controller, VDC), an intelligent cockpit domain controller (Cockpit Domain Controller, CDC), an intelligent driving domain controller (ADAS/AD Domain Controller, ADC), and a mobile data center (Mobile Data Center, MDC).

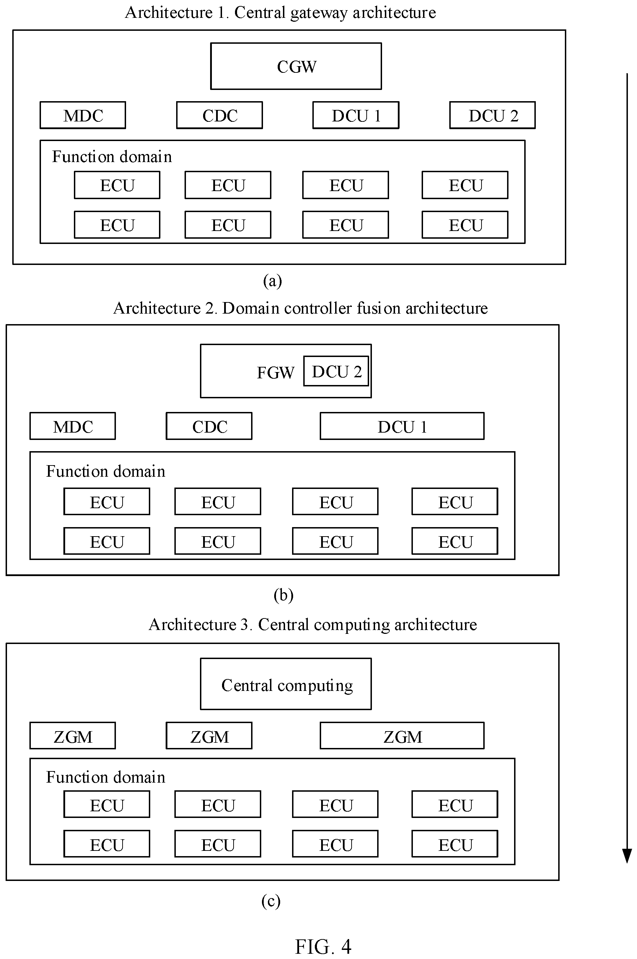

For example, as shown in (a) in FIG. 4, the central gateway architecture includes a function domain, and the function domain includes an electronic control unit (Electronic Control Unit, ECU). The ECU may be configured to control a driving status of the vehicle, for example, control an automatic transmission, an active suspension, an airbag, an entertainment system, or a sensor. The central gateway architecture further includes a plurality of DCUs, for example, includes an MDC, a CDC, and domain controllers such as a DCU 1 and a DCU 2. In the central gateway architecture, the computing power is centralized in the DCU. For example, the MDC, the CDC, the DCU 1, the DCU 2, and the like may be responsible for computing, and an instruction obtained by the DCU through computing may be executed by a corresponding ECU in the function domain. The central gateway architecture further includes a gateway (Gate Way, GW). The gateway is responsible for information exchange between different domain controllers. For example, the MDC and the CDC communicate with each other by using the gateway. For example, the GW may be at least one of a central gateway (Central Gate Way, CGW) and a fusion gateway (Fusion gate way, FGW). In (a) in FIG. 4, an example in which the gateway is a CGW is used.

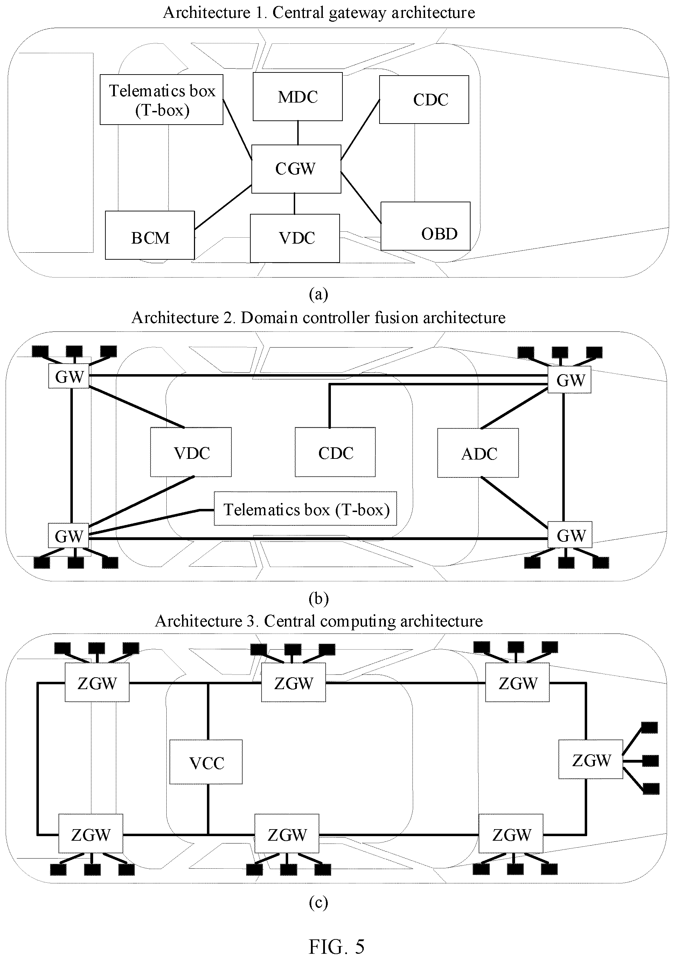

For ease of understanding, (a) in FIG. 5 is a schematic diagram of a vehicle architecture of a central gateway architecture. As shown in (a) in FIG. 5, various domain controllers (gray boxes) are connected to the central gateway.

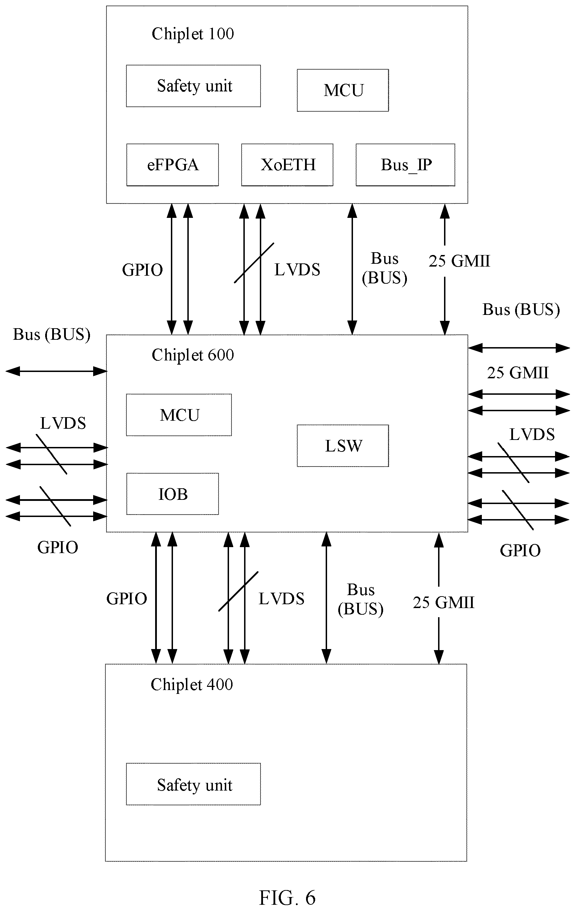

For a gateway chip in a vehicle based on the central gateway architecture, because the gateway of the central gateway architecture is configured to implement a function of forwarding data between different domain controllers, the gateway requires at least one chiplet with an exchange function, for example, requires the chiplet 600. Because the gateway further has a real-time control function, the gateway further requires at least one chiplet with the real-time control function, for example, the chiplet 100. Because the gateway further has a function of communicating with another device (for example, a domain controller), the gateway further requires at least one chiplet with an Ethernet transceiver function, for example, the fourth chiplet. Therefore, a loaded chip architecture of the gateway of the central gateway architecture may be shown in FIG. 6, and includes the chiplet 100, the chiplet 600, and the chiplet 400. Therefore, in this manner, a chiplet package of the gateway of the central gateway architecture can be quickly constructed.

For example, an example working procedure of the gateway in the vehicle of the central gateway architecture includes the following steps:

The chiplet 400 receives a control command of another device (for example, a mobile phone), and sends the control command to the chiplet 100 by using the chiplet 600. The chiplet 100 controls the execution apparatus 2 to execute the control command. For example, an example in which an external device is a mobile phone is used. The mobile phone sends an air-conditioner starting instruction to the vehicle. The chiplet 400 in the vehicle receives the starting instruction, and sends the starting instruction to the chiplet 100 by using the chiplet 600. The chiplet 100 controls an air-conditioner starting operation in the execution apparatus 2. For example, there are many similar operations, for example, operations such as seat heating and music playing.

For example, another example working procedure of the gateway in the vehicle of the central gateway architecture includes the following steps:

The sensor apparatus 1 includes a fuel level information collection apparatus that collects a fuel level signal. The chiplet 100 obtains, from the sensor apparatus 1, sensing data that is processed by the controller MCU in the chiplet 100 into an endurance mileage or a low fuel level alarm signal, performs protocol conversion on the information, for example, converts data output by the MCU into an Ethernet protocol packet, and sends the packet to the chiplet 600. The chiplet 600 sends, by using the chiplet 400, the fuel level information to an instrument device (another device) having an Ethernet interface, and the instrument device displays the endurance mileage or the low fuel level alarm indication signal.

### 2. Domain controller fusion architecture

A difference from the central gateway architecture is as follows: In the domain controller fusion architecture, different domain controllers may be fused, and/or a domain controller may be fused with a gateway. Therefore, a quantity of domain controllers is reduced, and performance of the gateway is improved. For example, as shown in (b) in FIG. 4, a DCU 2 and a DCU 1 are fused with the gateway. For example, the gateway may be at least one of a CGW and an FGW. In (b) in FIG. 4, an example in which the gateway is an FGW is used. The FGW is used as a communication node of the entire vehicle. Due to fusion of the domain controller, remaining domain controllers include three domain controllers (also called three domain controllers): an MDC, a CDC, and a VDC.

For ease of understanding, (b) in FIG. 5 is a schematic diagram of a vehicle architecture of a fusion domain controller architecture. As shown in (b) in FIG. 5, sensor apparatuses (a radar, a camera, and the like) are distributed at various positions on the vehicle, and the sensor apparatus establishes a connection to the domain controller by using the GW. For example, the sensor apparatus sends collected information to the VDC by using the GW, and the VDC may perform computing based on the information, and send a computing result to another domain controller.

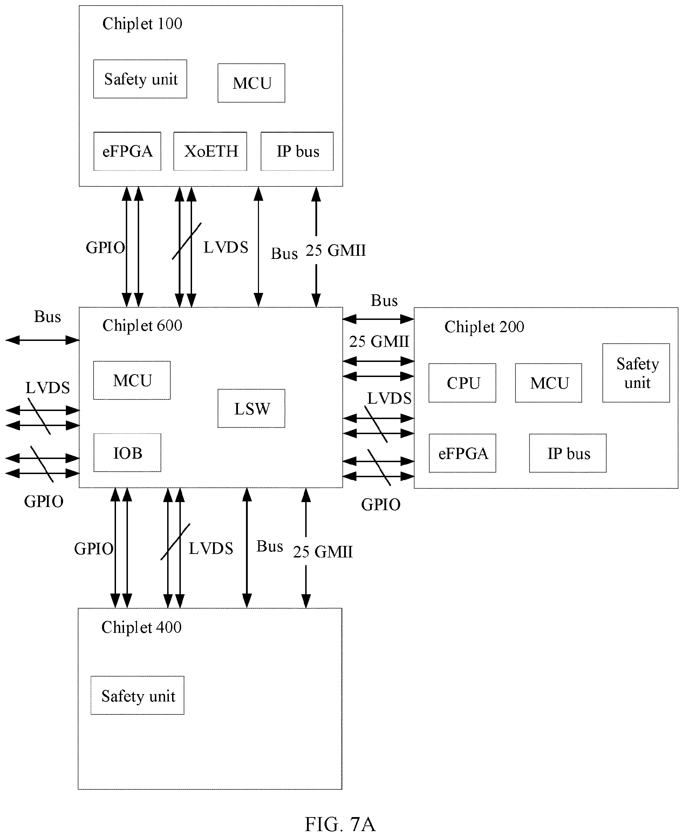

For a gateway chip in a vehicle of the domain controller fusion architecture, because the gateway of the domain controller fusion architecture is configured to implement a function of forwarding data between different domain controllers, the gateway requires at least one chiplet with an exchange function, for example, requires the chiplet 600. In addition, because a part of functions of the DCU are integrated into the gateway of the domain controller fusion architecture, the gateway further requires at least one computing chiplet, for example, the chiplet 200. Because the gateway further has a real-time control function, the gateway further requires at least one chiplet with the real-time control function, for example, the chiplet 100. Because the gateway further has a function of communicating with another device (for example, a domain controller), the gateway further requires at least one chiplet with an Ethernet transceiver function, for example, the fourth chiplet. Therefore, a loaded chip architecture of the gateway of the domain controller fusion architecture may be shown in FIG. 7A, and includes the chiplet 100, the chiplet 200, the chiplet 600, and the chiplet 400.

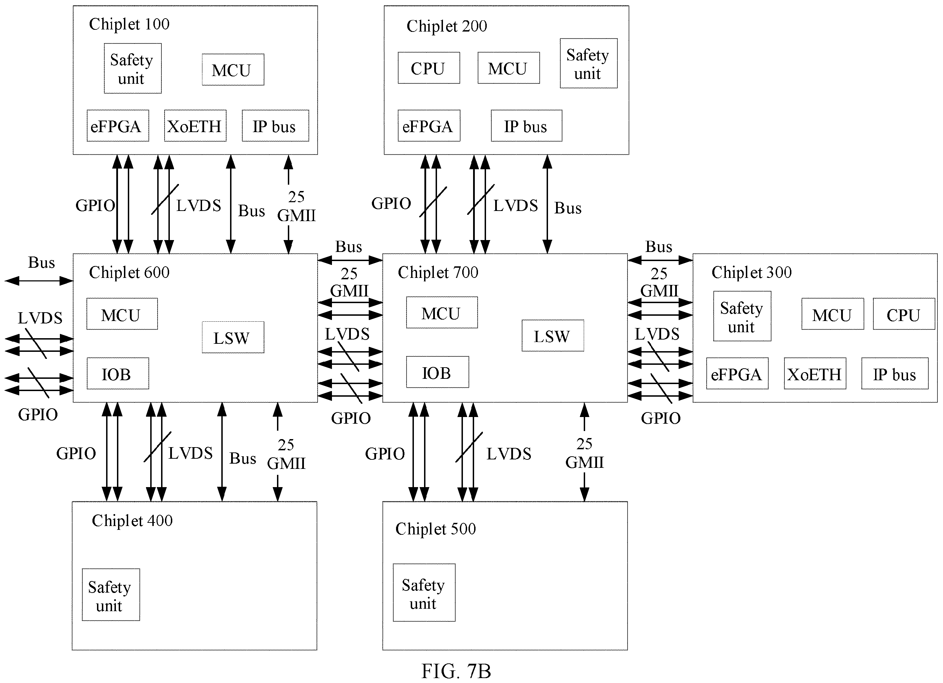

Optionally, if an image and/or video input function needs to be integrated into the gateway of the domain controller fusion architecture, the chiplet 300 may be further included. Optionally, the chiplet 300 may perform only image and/or video input, or may perform some image/video-related processing operations (for example, for details, refer to the following working procedure). Because the chiplet responsible for image input is added, an amount of exchanged information may increase. In this case, a quantity of exchange chiplets may be increased, and/or a quantity of Ethernet transceiver chiplets may be increased. For example, as shown in FIG. 7B, the chip architecture of the gateway of the domain controller fusion architecture includes the chiplet 100, the chiplet 200, the chiplet 300, the chiplet 600, the chiplet 700, the chiplet 400, and the chiplet 500.

For example, an example work procedure of the chip architecture of the gateway of the domain controller fusion architecture includes the following steps:

The sensor apparatus 1 collects sensing data. The chiplet 100 obtains the sensing data from the sensor apparatus 1, and performs protocol conversion, for example, converts the sensing data from the CAN to the Ethernet protocol. The sensing data includes position information. The chiplet 100 transmits the sensing data (the sensing data obtained after protocol conversion) to the chiplet 300 by using the chiplet 600 and the chiplet 700. The chiplet 300 determines a current position of the vehicle in a map application based on the position information, determines a destination, determines a driving route based on the current position and the destination, generates a control instruction based on the driving route, and sends the control instruction to the chiplet 100. The chiplet 100 sends the control instruction to a corresponding execution apparatus 2. For example, if the control instruction includes a left-turn/right-turn/U-turn instruction, the chiplet 100 sends the left-turn instruction to the steering wheel in the execution apparatus 2, to control the vehicle to perform a left-turn/right-turn/U-turn.

Alternatively, the T-box may be connected to the chiplet 500, and the chiplet 200 is responsible for an upgrading function of an OTA server online. The chiplet 500 receives a loading file in an Ethernet packet format, and sends, by using the chiplet 700, the loading file to the chiplet 200 for Ethernet packet processing. The chiplet 200 obtains the loading file through parsing, separately sends the loading file to a corresponding domain controller, and controls software upgrade.

### 3. Central computing architecture

A difference from the architecture 2 is as follows: A DCU is integrated into a central computing module in the architecture 3, so that computing power is more centralized. The central computing module may be a vehicle central computer (VCC, Vehicle Central Computer), as shown in (c) in FIG. 4. For ease of understanding, (c) in FIG. 5 is a schematic diagram of a vehicle architecture in a central computing stage of an entire vehicle. Gateways ZGWs are distributed around a VCC, and establish communication with the VCC. Each ZGW is separately connected to one or more sensor apparatuses.

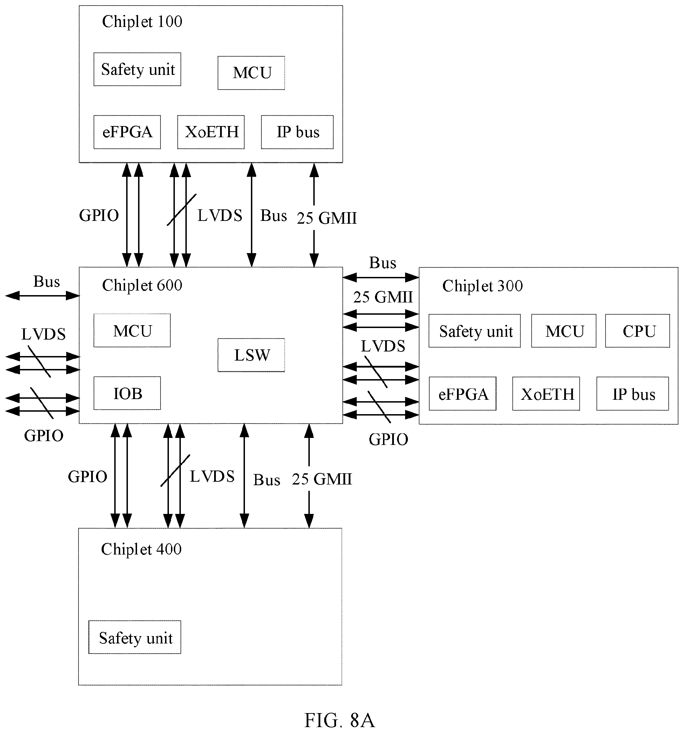

For a gateway chip in a vehicle of the central computing architecture, because the gateway of the central computing architecture is configured to implement a function of forwarding data between different domain controllers, the gateway requires at least one chiplet with a data exchange function, for example, requires the chiplet 600. In addition, because the computing power in the central computing architecture is centralized in the VCC, the gateway does not require a computing chiplet. Because the gateway further has a real-time control function, the gateway further requires at least one chiplet with the real-time control function, for example, the chiplet 100. Because the gateway further has a function of communicating with another device (for example, a domain controller), the gateway further requires at least one chiplet with an Ethernet transceiver function, for example, the chiplet 400. Because the gateway further has an image and/or video input function, the gateway further requires the chiplet 300. Therefore, a loaded chip architecture of the gateway of the central computing architecture may be shown in FIG. 8A, and includes the chiplet 100, the chiplet 300, the chiplet 600, and the chiplet 400.

For example, an example work procedure of the chip architecture of the gateway of the central computing architecture includes the following steps:

The sensor apparatus 1 collects sensing data. The chiplet 100 obtains sensing data from the sensor apparatus 1, performs protocol conversion, for example, converts the sensing data from the CAN into the Ethernet protocol, and sends, to the VCC for computing by using the chiplet 600 and the chiplet 400, the data obtained after protocol conversion. The chiplet 300 obtains image information, and sends the image information to the VCC for computing by using the chiplet 700 and the chiplet 400.

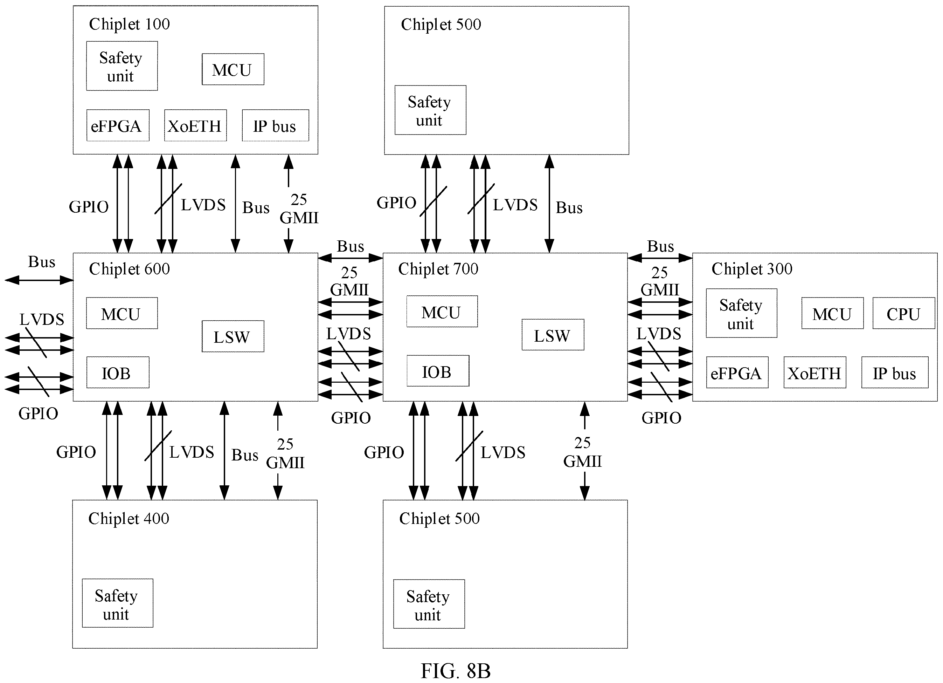

Optionally, if a data exchange function and an Ethernet transceiver function need to be added to the gateway of the central computing architecture, a quantity of data exchange chiplets and a quantity of Ethernet transceiver chiplets may be increased. For example, referring to FIG. 8B, the chip architecture of the gateway of the central computing architecture may include the chiplet 100, the chiplet 300, the chiplet 600, and the chiplet 700, two chiplets 500, and one chiplet 400.

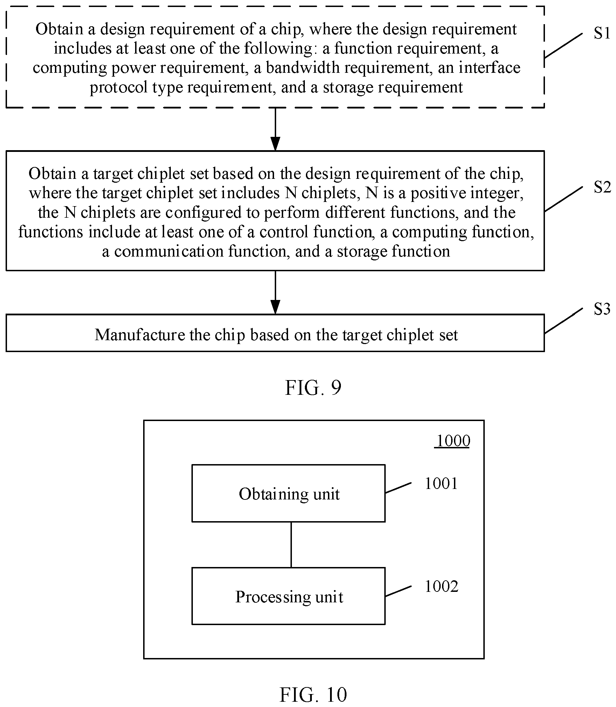

Based on a same invention concept, an embodiment of this application further provides a chip design method. FIG. 9 is a schematic flowchart of a chip design method according to an embodiment of this application. The procedure includes the following steps:

S 1: Obtain a design requirement of a chip, where the design requirement includes at least one of the following: a function requirement, a computing power requirement, a bandwidth requirement, an interface protocol type requirement, and a storage requirement.

The function requirement includes, for example, whether a real-time control function for a vehicle or an image processing function is required. The computing power requirement includes, for example, whether computing power is required and a requirement on a magnitude of computing power. The bandwidth requirement includes, for example, a specific bandwidth that is required. The interface protocol type requirement includes, for example, which protocol type of interface is required, for example, an Ethernet interface. The storage requirement includes, for example, whether a storage capability is required and/or a requirement on a magnitude of the storage capability.

Optionally, S1 may be performed, or may not be performed, and therefore is represented by using a dashed line in the figure.

S2: Obtain a target chiplet set based on the design requirement of the chip, where the target chiplet set includes N chiplets, N is a positive integer, the N chiplets are configured to perform different functions, and the functions include at least one of a control function, a computing function, a communication function, and a storage function.

For example, the target chiplet set includes at least one of the following: a first chiplet, a second chiplet, a third chiplet, a fourth chiplet, and a fifth chiplet, where the first chiplet is configured to connect to at least one sensor and/or control at least one executor, the second chiplet is configured to perform computing, the third chiplet is configured to perform image processing, the fourth chiplet is configured to connect to another device, and the fifth chiplet is configured to: connect to another chiplet, and implement information exchange between chiplets.

For example, it is assumed that the function requirement needs to include the real-time control function for the vehicle and the image processing function. In this case, the target chiplet set includes the first chiplet and the third chiplet. It is assumed that the computing power requirement includes that the computing power is required and strong computing power is required. In this case, the target chiplet set may include one or more second chiplets and the like. It is assumed that the bandwidth requirement is at least 1000 M, and the interface protocol type requirement is the Ethernet interface. In this case, the target chiplet set includes the fourth chiplet, and the fourth chiplet has a physical layer transceiving function of a specific bandwidth, where the bandwidth is greater than or equal to 1000 M. It is assumed that the storage requirement is that the storage capability is required and the storage capability is M G. In this case, the target chiplet set includes a storage chiplet. If a storage size of the storage chiplet is N, M/N storage chiplets are required. It may be understood that, the target chiplet set further requires an exchange chiplet, to implement information exchange between different chiplets. Therefore, the target chiplet set includes the fifth chiplet.

For example, for chips designed based on design requirements of gateway chips in three architectures: a central gateway architecture, a domain controller fusion architecture, and a central processing/computing architecture, refer to the foregoing descriptions. Details are not described herein again.

S3: Obtain the chip based on the target chiplet set.

For example, after the target chiplet set is obtained based on the design requirement of the chip, a connection relationship between chiplets in the target chiplet set is determined, and the chiplets are connected based on the connection relationship to obtain the chip. The connection relationship includes a circuit connection relationship and a spatial connection relationship, for example, a circuit connection relationship and a spatial connection direction from the first chiplet to the fifth chiplet. For example, the spatial connection relationship may be understood as how a plurality of chiplets are stacked (for example, tiled or piled).

FIG. 10 is a block diagram of a structure of a chip design apparatus 1000 according to an embodiment of this application. The chip design apparatus 1000 includes an obtaining unit 1001 and a processing unit 1002. The obtaining unit 1001 is configured to obtain a design requirement of a chip, where the design requirement includes at least one of the following: a function requirement, a computing power requirement, a bandwidth requirement, an interface protocol type requirement, and a storage requirement. The processing unit 1002 is configured to obtain a target chiplet set based on the design requirement of the chip, where the target chiplet set includes at least one of the following: a first chiplet, a second chiplet, a third chiplet, a fourth chiplet, and a fifth chiplet, where the first chiplet is configured to connect to at least one sensor and/or control at least one executor, the second chiplet is configured to perform computing, the third chiplet is configured to perform image processing, the fourth chiplet is configured to connect to another device, and the fifth chiplet is configured to: connect to another chiplet, and implement information exchange between chiplets.

For example, the obtaining unit 1001 and the processing unit 1002 each may be a processor, for example, an application processor or a baseband processor. The processor may include one or more central processing modules (central processing unit, CPU).

For example, the chip design apparatus 1000 may be a vehicle or an in-vehicle apparatus, or a processing module in a vehicle or an in-vehicle apparatus, for example, an in-vehicle processor or an electronic control unit (electronic control unit, ECU), or may be a terminal device or a server.

Optionally, the chip design apparatus 1000 may further include a communication unit. The communication unit may include a receiving unit and a sending unit. The sending unit may be a functional module, configured to perform a sending operation. The receiving unit may be a functional module, configured to perform a receiving operation.

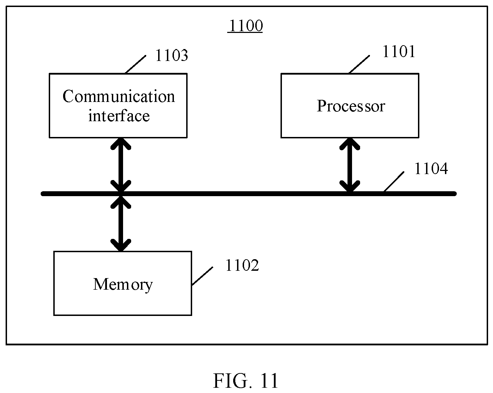

FIG. 11 is a block diagram of a structure of a chip design apparatus 1100 according to an embodiment of this application. The chip design apparatus 1100 shown in FIG. 11 includes at least one processor 1101. The chip design apparatus 1100 further includes at least one memory 1102, configured to store program instructions and/or data. The memory 1102 is coupled to the processor 1101. The coupling in this embodiment of this application may be indirect coupling or a communication connection between apparatuses, units, or modules in an electrical form, a mechanical form, or another form, and is used for information exchange between the apparatuses, the units, or the modules. The processor 1101 may cooperate with the memory 1102. The processor 1101 may execute the program instructions stored in the memory 1102. At least one of the at least one memory 1102 may be included in the processor 1101. The chip design apparatus 1100 may further include an interface circuit (not shown in the figure). The processor 1101 is coupled to the memory 1102 by using the interface circuit, and the processor 1101 can execute the program code in the memory 1102, to implement the chip design method provided in the embodiments of this application.

Optionally, the chip design apparatus 1100 may further include a communication interface 1103, configured to communicate with another device by using a transmission medium, so that the chip design apparatus 1100 can communicate with the another device. In this embodiment of this application, the communication interface may be a transceiver, a circuit, a bus, a module, or a communication interface of another type. In this embodiment of this application, when the communication interface is a transceiver, the transceiver may include an independent receiver and an independent transmitter, or may be a transceiver integrated with a transceiving function, an interface circuit, or the like.

It should be understood that a connection medium between the processor 1101, the memory 1102, and the communication interface 1103 is not limited in this embodiment of this application. In this embodiment of this application, in FIG. 11, the memory 1102, the processor 1101, and the communication interface 1103 are connected to each other by using a communication bus 1104. The bus is represented by a thick line in FIG. 11, and connection manners of other components are merely used for schematic descriptions and are not construed as a limitation. The bus may include an address bus, a data bus, a control bus, and the like. For ease of representation, only one thick line is used to represent the bus in FIG. 11, but this does not mean that there is only one bus or only one type of bus.

For example, when the computer instructions in the memory 1102 are executed by the processor 1101, the apparatus is enabled to: obtain a design requirement of a chip, where the design requirement includes at least one of the following: a function requirement, a computing power requirement, a bandwidth requirement, an interface protocol type requirement, and a storage requirement; and obtain a target chiplet set based on the design requirement of the chip, where the target chiplet set includes at least one of the following: a first chiplet, a second chiplet, a third chiplet, a fourth chiplet, and a fifth chiplet, where the first chiplet is configured to connect to at least one sensor and/or control at least one executor, the second chiplet is configured to perform computing, the third chiplet is configured to perform image processing, the fourth chiplet is configured to connect to another device, and the fifth chiplet is configured to: connect to another chiplet, and implement information exchange between chiplets.

This application provides a computer-readable storage medium, including computer instructions. When the computer instructions are run by a processor, the chip design apparatus is enabled to perform the chip design method in the embodiments of this application.

This application provides a computer program product, where the computer program product includes a computer program, and when the computer program product runs on a processor, the chip design apparatus is enabled to perform the chip design method in the embodiments of this application.

In the embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In the embodiments of this application, the memory may be a nonvolatile memory, for example, a hard disk drive (hard disk drive, HDD) or a solid-state drive (solid-state drive, SSD), or may be a volatile memory (volatile memory) such as a random access memory (random-access memory, RAM). The memory is any other medium that can carry or store expected program code in a form of an instruction or a data structure and that can be accessed by a computer, but is not limited thereto. The memory in the embodiments of this application may alternatively be a circuit or any other apparatus that can implement a storage function, and is configured to store the program instructions and/or the data.

In the embodiments of this application, "at least one" means one or more, and "a plurality of' means two or more. The term "and/or" describes an association relationship for describing associated objects and represents that three relationships may exist. For example, A and/or B may represent the following three cases: Only A exists, both A and B exist, and only B exists. A and B each may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

All or some of the methods in the embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

Clearly, a person skilled in the art can make various modifications and variations to this application without departing from the scope of this application. This application is intended to cover these modifications and variations of this application provided that they fall within the scope of protection defined by the following claims and their equivalent technologies.

## Claims

1. A chip, comprising a first chiplet, a fourth chiplet, and a fifth chiplet, wherein
the first chiplet is configured to connect to at least one sensor and/or control at least one executor;
the fourth chiplet is configured to connect to another device;
the fifth chiplet is configured to: connect to another chiplet, and implement information exchange between chiplets; and
the first chiplet, the fourth chiplet, and the fifth chiplet are chiplets that are obtained based on a design requirement of the chip and that are configured to implement different functions.

2. The chip according to claim 1, wherein
the fourth chiplet is configured to: receive a control command from the another device, and send the control command to the first chiplet by using the fifth chiplet, and the first chiplet is configured to control the executor to execute the control command; or
the first chiplet is configured to send, to the fourth chiplet by using the fifth chiplet, sensor data obtained from the sensor, and the fourth chiplet is configured to send the sensor data to a domain controller in a vehicle, to perform computing by using the domain controller.

3. The chip according to claim 1 or 2, wherein the chip further comprises a second chiplet; and
the second chiplet is configured to perform computing, and the second chiplet is connected to the fifth chiplet.

4. The chip according to claim 3, wherein
the first chiplet is configured to send, to the second chiplet by using the fifth chiplet, the sensor data obtained from the sensor; the second chiplet is configured to: perform computing based on the sensor data to generate a corresponding output signal, and send the output signal to the fourth chiplet by using the fifth chiplet; and the fourth chiplet is configured to send the output signal to the another device.

5. The chip according to any one of claims 1 to 4, wherein the chip further comprises a third chiplet; and
the third chiplet is configured to perform image processing, and the third chiplet is connected to the fifth chiplet.

6. The chip according to claim 5, wherein
the third chiplet is configured to send an image to the fourth chiplet by using the fifth chiplet, and the fourth chiplet is configured to send the image to the domain controller in the vehicle for processing.

7. The chip according to any one of claims 1 to 6, wherein the first chiplet comprises at least one micro control unit MCU, a protocol converter, and one or more interfaces;
the first chiplet is connected to the sensor, the executor, and another chiplet through the interface;
the protocol converter is configured to convert the sensor data obtained from the sensor from a first protocol to a second protocol, wherein the first protocol is a communication protocol between the sensor and the first chiplet, and the second protocol is a protocol used for information exchange inside the chip; and
the micro control unit MCU is configured to: process the sensor data obtained after protocol conversion, to obtain a control signal, and send the control signal to the executor for execution through the interface.

8. The chip according to any one of claims 1 to 7, wherein the second chiplet comprises at least one processor, at least one MCU, and one or more interfaces;
the second chiplet is connected to another chiplet through the one or more interfaces;
the processor is configured to perform computing; and
the MCU is configured to implement real-time control on the second chiplet.

9. The chip according to any one of claims 1 to 8, wherein the third chiplet comprises at least one GPU, at least one MCU, and one or more interfaces;
the third chiplet is connected to another chiplet through the one or more interfaces;
the GPU is configured to perform image processing; and
the MCU is configured to be responsible for real-time control on the third chiplet.

10. The chip according to any one of claims 1 to 9, wherein the fourth chiplet comprises one or more interfaces and a transceiver;
the fourth chiplet is connected to another chiplet through the one or more interfaces; and
the fourth chiplet is connected to the another device by using the transceiver, the transceiver supports a protocol, and the protocol comprises a protocol used for information exchange inside the chip and/or a communication protocol between the another device and the fourth chiplet.

11. The chip according to any one of claims 1 to 10, wherein the fifth chiplet comprises at least one MCU, an information forwarder, and one or more interfaces;
the fifth chiplet is connected to another chiplet through the one or more interfaces;
the MCU is responsible for real-time control on the fifth chiplet; and
the information forwarding module is configured to implement information forwarding between different chiplets.

12. The chip according to any one of claims 1 to 11, wherein the first chiplet, the second chiplet, the third chiplet, the fourth chiplet, and the fifth chiplet each comprise a safety unit, configured to perform an abnormality alarm.

13. A chip manufacturing method, comprising:
obtaining a target chiplet set, wherein the target chiplet set comprises N chiplets, N is a positive integer, the N chiplets are configured to perform different functions, and the functions comprise at least one of a control function, a computing function, a communication function, and a storage function; and
obtaining a chip based on the target chiplet set.

14. The method according to claim 13, wherein the target chiplet set comprises at least one of the following:
a first chiplet, a second chiplet, a third chiplet, a fourth chiplet, and a fifth chiplet, wherein
the first chiplet is configured to connect to at least one sensor and/or control at least one executor, the second chiplet is configured to perform computing, the third chiplet is configured to perform image processing, the fourth chiplet is configured to connect to another device, and the fifth chiplet is configured to: connect to another chiplet, and implement information exchange between chiplets.

15. The method according to claim 13 or 14, wherein a design requirement comprises at least one of the following: a function requirement, a computing power requirement, a bandwidth requirement, an interface protocol type requirement, and a storage requirement.

16. The method according to either of claims 14 and 15, wherein the first chiplet comprises at least one micro control unit MCU, a protocol converter, and one or more interfaces;
the first chiplet is connected to the sensor, the executor, and another chiplet through the interface;
the protocol converter is configured to convert sensor data obtained from the sensor from a first protocol to a second protocol, wherein the first protocol is a communication protocol between the sensor and the first chiplet, and the second protocol is a protocol used for information exchange inside the chip; and
the micro control unit MCU is configured to: process the sensor data obtained after protocol conversion, to obtain a control signal, and send the control signal to the executor for execution through the interface.

17. The method according to any one of claims 14 to 16, wherein the second chiplet comprises at least one processor, at least one MCU, and one or more interfaces;
the second chiplet is connected to another chiplet through the one or more interfaces;
the processor is configured to perform computing; and
the MCU is configured to be responsible for real-time control on the second chiplet.

18. The method according to any one of claims 14 to 17, wherein the third chiplet comprises at least one graphics processing unit GPU, at least one MCU, and one or more interfaces;
the third chiplet is connected to another chiplet through the one or more interfaces;
the GPU is configured to perform image processing; and
the MCU is configured to be responsible for real-time control on the third chiplet.

19. The method according to any one of claims 14 to 18, wherein the fourth chiplet comprises one or more interfaces and a transceiver;
the fourth chiplet is connected to another chiplet through the one or more interfaces; and
the fourth chiplet is connected to the another device by using the transceiver, the transceiver supports a protocol, and the protocol comprises a protocol used for information exchange inside the chip and/or a communication protocol between the another device and the fourth chiplet.

20. The method according to any one of claims 14 to 19, wherein the fifth chiplet comprises at least one MCU, an information forwarder, and one or more interfaces;
the fifth chiplet is connected to another chiplet through the one or more interfaces;
the MCU is responsible for real-time control on the fifth chiplet; and
the information forwarder is configured to implement information forwarding between different chiplets.

21. The method according to any one of claims 14 to 20, wherein the first chiplet, the second chiplet, the third chiplet, the fourth chiplet, and the fifth chiplet each comprise a safety unit, configured to perform an abnormality alarm.

22. The method according to any one of claims 13 to 21, wherein after the obtaining a target chiplet set, the method further comprises: determining a connection relationship between chiplets in the target chiplet set, wherein the connection relationship comprises a logical connection relationship and a spatial connection relationship.

23. A gateway device, comprising the chip according to any one of claims 1 to 12.

24. A vehicle, comprising the chip according to any one of claims 1 to 12.

25. A chip manufacturing apparatus, comprising:
a memory and a processor, wherein the memory is configured to store computer program code, the computer program code comprises computer instructions, and when the computer instructions are executed by the processor, the apparatus is enabled to perform the method according to any one of claims 13 to 22.

26. A computer-readable storage medium, comprising computer instructions, wherein when the computer instructions run on a computer, the computer is enabled to perform the method according to any one of claims 13 to 22.
